# FASCICULE DE BREVET EUROPEEN

(11) **EP 1 938 971 B1**
(45) Date de publication et mention de la délivrance du brevet: **01.04.2009**
(21) Numéro de dépôt: 07023392.9
(22) Date de dépôt: 04.12.2007
(51) Int. Cl.: B41F 13/00, B41F 13/008, F16D 1/06, F16D 1/076, F16D 3/72

(54) **Dispositif d'accouplement pour l'entraînement d'un cylindre d'un dispositif d'impression**
Kupplungsvorrichtung für den Antrieb eines Zylinders einer Druckvorrichtung
Coupling device for powering a cylinder of a printing device

(30) Priorité: 14.12.2006 EP 06025943
(43) Date de publication de la demande: 02.07.2008
(73) Titulaire: BOBST SA, 1001 Lausanne (CH)
(72) Inventeur: Clement, Philippe, 1305 Penthalaz (CH)
(74) Mandataire: Poirier, Jean-Michel Serge

(56) Documents cités:
- EP-A- 1 719 618
- EP-A1- 0 384 027
- GB-A- 2 082 286
- US-A- 5 299 880

## Description

La présente invention a pour objet un dispositif d'accouplement pour l'entraînement d'un cylindre d'un dispositif d'impression.

L'impression en héliogravure est employée particulièrement pour les éditions de grande qualité et de grands tirages où le graphisme doit jouer un rôle important pour assurer la promotion d'un produit. Ce procédé d'impression permet en un seul passage d'imprimer jusqu'à dix couleurs, avec des encres à solvants, à l'eau ou autres; d'imprimer des vernis mats, brillants ou structurés ; d'imprimer en recto et/ou en verso et de gaufrer.

L'héliogravure est un procédé d'impression rotatif utilisable pour de nombreux supports, dont le papier ou le carton, utilisant des cylindres gravés comme forme d'impression. Ainsi, dans une machine ou une chaîne d'impression par héliogravure, un support à imprimer en bande traverse une succession de groupes imprimeurs, chaque groupe imprimeur procédant à l'impression d'une couleur particulière ou d'un vernis particulier, ou bien encore effectuant un gaufrage.

### Etat de la technique

Les dispositifs d'accouplement existants sont des assemblages mécaniques complexes et onéreux. Malgré tous les soins apportés à la conception et à la fabrication de ces dispositifs d'accouplement, ils se brisent fréquemment du fait des contraintes subies, et ne donnent donc pas entière satisfaction.

On connaît d'après le document US- 5.299.880 un dispositif de couplage. Le dispositif de couplage comprend un corps qui est un cylindre creux allongé, un flasque de montage au niveau de l'une des extrémités du cylindre destiné à monter le dispositif de couplage, et un flasque de montage monté au niveau de l'extrémité opposée de l'arbre du cylindre. Les flasques sont des disques cylindriques qui sont chacun positionnés à angle droit par rapport à l'axe du cylindre.

### Exposé de l'invention

Le but de la présente invention est de remédier à ces problèmes de fiabilité des dispositifs d'accouplement existants.

A cet effet, la présente invention a pour objet un dispositif d'accouplement pour l'entraînement d'un cylindre d'un dispositif d'impression, comportant une partie centrale cylindrique et deux flasques placés respectivement à l'une et l'autre des extrémités de la partie centrale cylindrique.

Le dispositif d'accouplement est caractérisé
- en ce qu'il comprend une unique pièce d'acier allié au chrome, nickel et molybdène ayant subit une trempe à coeur,
- en ce que chacun des flasque comporte un flanc dont une partie fait fonction de membrane, et
- en ce que pour chacun des flasques, le rapport de la différence entre le diamètre du flasque et le diamètre de la partie centrale cylindrique divisée par l'épaisseur moyenne de la partie du flanc du flasque, est compris entre 7 et 15.

Dans l'ensemble de la description, le dispositif d'impression est défini comme étant une machine d'impression, par exemple en héliographie avec au moins un groupe imprimeur, en flexographie, en offset, en sérigraphie, en taille douce, et d'autres encore. En s'écartant radicalement des dispositifs existants, la solution proposée est particulièrement simple aussi bien du point de vue de la structure mécanique du dispositif d'accouplement que de son utilisation. Le dispositif selon l'invention supporte parfaitement les contraintes propres à l'impression en héliogravure, avec une excellente fiabilité.

### Brève description des dessins

D'autres particularités et avantages de la présente invention apparaîtront au cours de la description qui va suivre, et qui sera faite à l'aide des dessins annexés qui illustrent schématiquement, et à titre d'exemple, une forme de réalisation du dispositif d'accouplement objet de la présente invention, dans lesquels :
- La Figure 1 est une vue schématique d'un groupe imprimeur en héliogravure comprenant un chariot imprimeur ;
- la Figure 2 est une représentation schématique du chariot imprimeur ;
- la Figure 3 représente schématiquement le positionnement d'un dispositif d'accouplement au sein d'une machine d'impression en héliogravure ;
- la Figure 4 est une vue schématique d'un dispositif d'accouplement selon l'invention ; et
- la Figure 5 est une vue en coupe schématique du dispositif d'accouplement selon l'invention représenté sur la Figure 4.

### Exposé détaillé de modes de réalisation préférés

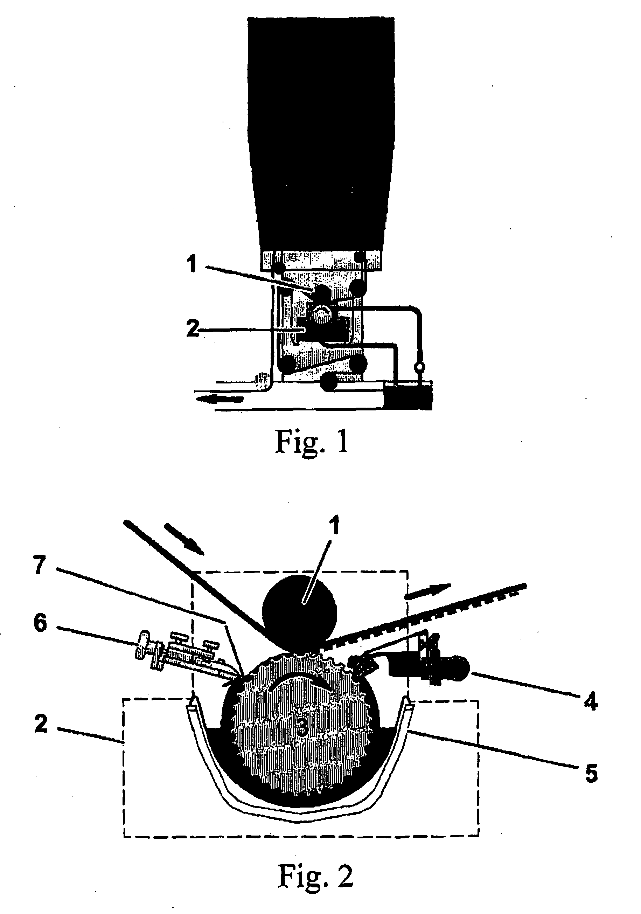

Au sein de chaque groupe imprimeur, schématiquement représenté sur la Figure 1, un rouleau presseur (1) va fortement appuyer le support sur un cylindre gravé (3) entraîné en rotation.

Afin de pouvoir facilement et rapidement procéder à des changements de travail d'impression, le cylindre gravé (3) repose sur des galets montés sur un chariot indépendant de la machine d'impression.

Un groupe imprimeur par héliogravure comprend donc, entre autres, les éléments suivants :
- un rouleau presseur (1) qui permet par forte pression le transfert de l'encre des alvéoles du cylindre gravé au support d'impression,
- un chariot imprimeur (2) lequel, représenté sur la Figure 2, comprend les éléments suivants :
   - un cylindre gravé (3) qui transfère l'encre en quantité contrôlée du système d'encrage au support d'impression en reproduisant le motif à imprimer,
   - un applicateur d'encre (4) en forme de réservoir qui déverse l'encre sur le cylindre gravé (3),
   - un bac à encre (5) qui récupère le trop plein d'encre,
   - une racle (6) qui essuie le trop surplus d'encre sur le cylindre gravé (3) au moyen d'une lame (7),
- une pompe qui assure l'acheminement de l'encre du réservoir à l'applicateur d'encre (4),
- un sécheur qui assure l'évaporation rapide des solvants ou de l'eau, ou bien la polymérisation des encres à UV.

En héliogravure, le cylindre gravé (3) est le trait d'union entre l'applicateur d'encre (4) et le support d'impression. Son rôle est double car, par les multiples alvéoles gravées à sa surface, il permet à la fois de transférer l'encre sur le support d'impression et de reproduire le motif à imprimer. La qualité de l'impression dépend donc fortement de la qualité des cylindres gravés (3).

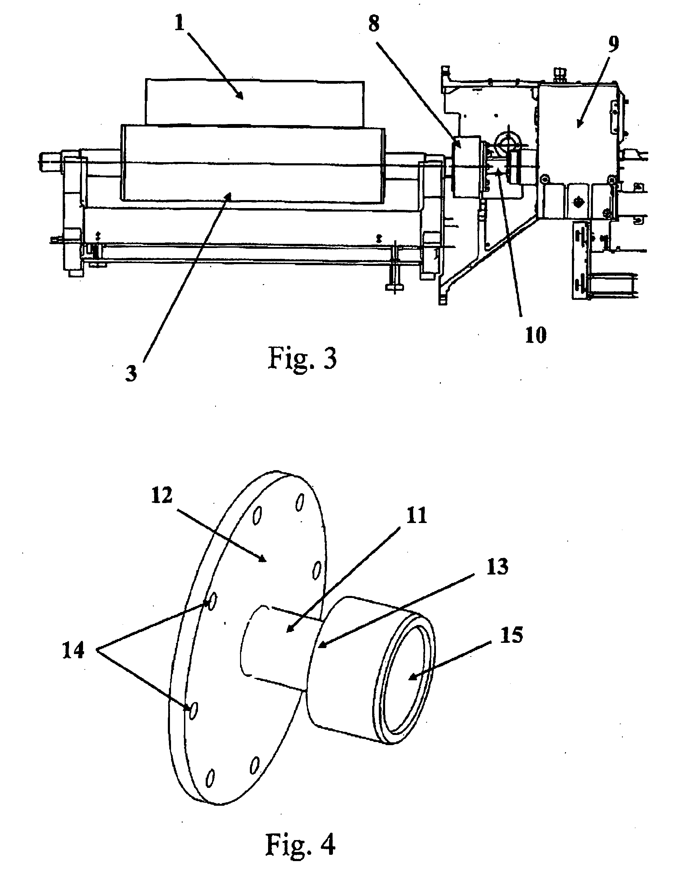

La Figure 3 représente le système d'entraînement du cylindre gravé au sein d'un groupe imprimeur. Lorsque le chariot imprimeur (2) est installé dans un groupe imprimeur, l'extrémité du cylindre gravé (3) est saisie par une pince (8) montée sur un accouplement (10), lui même monté sur une boîte d'entraînement (9) installée à l'arrière du groupe imprimeur. La pince peut être mécanique, pneumatique ou hydraulique.

Ce système permet d'assurer l'entraînement du cylindre gravé (3), qui est une fonction essentielle d'un groupe imprimeur car cet entraînement garantit la bonne précision des positionnements relatifs des couleurs entre elles (ce que l'on appelle également le registre), aussi bien longitudinalement que transversalement.

Au sein de ce système, le dispositif d'accouplement (10) est une pièce capitale. Fonctionnellement, ce dispositif est le lien flexible entre le cylindre gravé (3) et son entraînement (9), permettant de compenser aussi bien les tolérances de montage et d'usinage des pièces que leurs déformations. Les tolérances d'usinage concernent les défauts de fabrication du cylindre gravé (3). Les tolérances de montages sont surtout liées au fait que les chariots des groupes imprimeurs sont conçus de façon à être rapidement changés, afin de pouvoir procéder le plus rapidement possible à un changement de travail, et de pouvoir les nettoyer en temps masqué, c'est-à-dire sans que le temps de nettoyage implique un arrêt de la chaîne d'impression.

Un tel système de chariot amovible entraîne donc une plus grande erreur d'alignement du cylindre d'impression (3) avec la boîte d'entraînement (9), erreur que doit compenser le dispositif d'accouplement (10).

Enfin, même si le cylindre gravé (3) est extrêmement rigide, il fléchit sous l'effet de la grande pression appliquée par le rouleau presseur (1), ce qui a pour conséquence de courber l'axe du cylindre gravé (3), donc de dévier cet axe à l'extrémité du cylindre (3), là où la pince (8) portée par le dispositif d'accouplement (10) va le saisir.

Enfin, la masse de la pince (8) est d'environ 20 kg. Lorsque la pince (8) ne saisit pas de cylindre gravé (3), elle est suspendue au dispositif d'accouplement (10). Le dispositif d'accouplement (10) doit alors permettre une rotation allant jusqu'à 1000 tours par minute sans que la rotation de la pince (8) suspendue ne détériore la boîte d'entraînement (9).

En raison de ces contraintes extrêmes, spécifiques à l'impression en héliogravure, le dispositif d'accouplement (10) doit avoir les caractéristiques physiques et mécaniques suivantes :
- en rotation, le dispositif d'accouplement (10) doit être le plus rigide possible, afin de transmettre le couple sur le cylindre gravé (3) tout en assurant une excellente qualité de registre longitudinal;
- selon son axe X, le dispositif d'accouplement (10) doit également être le plus rigide possible, afin d'assurer une excellente qualité de registre latéral ;
- en revanche, selon les axes Y et Z définissant le plan perpendiculaire à l'axe X, le dispositif d'accouplement (10) doit être le moins rigide possible, afin de corriger au mieux les erreurs d'alignement, les erreurs de fabrication et les déformations du cylindre gravé (3) ; néanmoins, il doit être suffisamment rigide pour permettre une rotation lorsque la pince (8) ne saisit pas de cylindre gravé (3) ; et
- il doit avoir des dimensions et une masse relativement réduites.

La difficulté de conception et de développement du dispositif d'accouplement (10) réside dans le fait que les contraintes de rigidité en rotation et selon l'axe X s'opposent à la contrainte de faible rigidité selon les axes Y et Z.

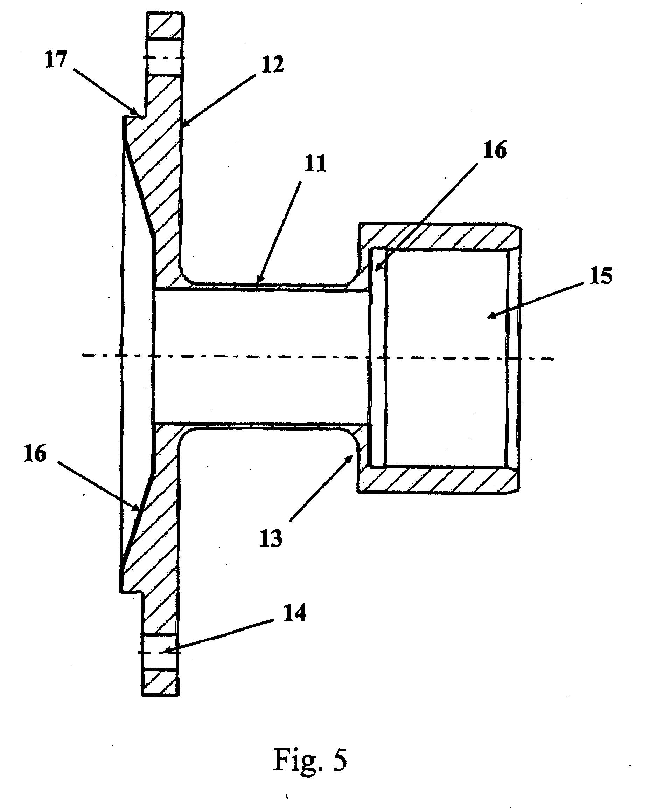

Un dispositif d'accouplement (10) conforme à l'invention est représenté aux Figures 4 et 5. D'une conception radicalement différente, ce dispositif d'accouplement (10) est constitué d'une unique pièce en acier, par opposition aux assemblages mécaniques complexes des dispositifs existants.

Afin d'assurer avec une grande fiabilité les fonctions qui sont les siennes et donc de subir les contraintes mécaniques propres à l'impression en héliogravure, le dispositif (10) présente trois caractéristiques essentielles :
- la matière dont il est composé,
- le traitement qu'a subi cette matière lors de la fabrication, et
- sa forme géométrique.

Le dispositif d'accouplement (10) selon l'invention est composé d'un acier allié au chrome, nickel et molybdène qui a subi une trempe à coeur. Cette matière et ce traitement confèrent au dispositif les caractéristiques mécaniques de rigidité souhaitées, aussi bien en rotation que selon l'axe X.

Selon l'invention, le dispositif d'accouplement (10) comprend une partie centrale cylindrique (11) et deux flasques (12 et 13) placés respectivement à l'une et l'autre des extrémités de la partie centrale cylindrique (11). Le premier des flasques (12) est conçu pour supporter une pince (8), laquelle est destinée à saisir l'extrémité d'un cylindre gravé (3) d'un chariot d'impression en héliogravure. Le deuxième des flasques (13) est conçu pour être relié à l'arbre d'une boîte d'entraînement (6). Ainsi, sur la Figure 4, le premier flasque (12) est muni d'ouvertures (14) pour laisser passer des vis de fixation non représentées, alors que le deuxième flasque (13) est muni d'un alésage (15) dans lequel une bague d'expansion non représentée vient se placer.

Lorsque le dispositif d'accouplement (10) est installé dans un système d'impression en héliogravure, il est relié d'un côté à une boîte d'entraînement (6) au moyen d'une bague d'expansion insérée puis dilatée dans l'alésage (15), et de l'autre côté relié à une pince (8) attachée par des système de fixation au travers des ouvertures (14) et destinée à saisir l'extrémité d'un cylindre gravé (3).

Une partie (16) du flanc de chacun des flasques (12 et 13), perpendiculaire à la partie centrale cylindrique (11), sera d'épaisseur faible afin de se déformer sous les contraintes lorsqu'un cylindre gravé (3) sera effectivement saisi par la pince (8) et entraîné en rotation par la boîte d'entraînement (6), et de faire ainsi fonction de membrane. Une partie (16) du flanc de chacun des flasques (12 et 13) présente ainsi une capacité de souplesse.

Dans l'exemple de réalisation représenté aux Figures 4 et 5, cette partie (16) du flanc faisant fonction de membrane s'étend pour le premier flasque (12) de la jonction avec la partie centrale cylindrique (11) jusqu'à la zone (17) d'appui de la pince (8). Et, pour le deuxième flasque (13), la partie de flanc (16) faisant fonction de membrane s'étend de la jonction avec la partie centrale cylindrique (11) jusqu'à la jonction avec l'alésage (15). Elle est donc identique au flanc du deuxième flasque (13) situé à l'intérieur de l'alésage. Ces deux parties (16) sont indiquées sur la Figure 5 au moyen d'un trait gras.

Conformément à l'invention, pour chacun des flasques (12 et 13), lorsque l'on calcule la différence entre le diamètre du flasque moins le diamètre de la partie centrale cylindrique (11), et que l'on divise cette différence par l'épaisseur moyenne de la partie (16) de son flanc faisant fonction de membrane, le rapport ainsi obtenu est compris entre 7 et 15.

Cette géométrie particulière permet à la partie centrale cylindrique (11) de se comporter comme un élément poutre encastré aux deux extrémités dont l'une, en se déplaçant, le déforme en rattrapant le décalage de positions selon les axes Y et Z. Les parties (16) des flancs des deux flasques (12 et 13) faisant fonction de membranes se déforment sous les contraintes dynamiques en corrigeant les défauts angulaires dus, par exemple, à la déformation du cylindre gravé (3) selon l'axe Z ou à un biaisage du cylindre gravé (3) selon l'axe Y.

Le biaisage du cylindre (3), par déplacement de l'une de ses extrémité selon l'axe Y, est en effet parfois utilisé pour rattraper les erreurs de gravure ainsi que les erreurs de parallélisme entre le cylindre gravé (3) et la racle (6) (technique également appelé skewing en anglais).

Selon le rapport choisi, les parties (16) des flancs des flasques (12 et 13) faisant fonction de membranes se déforment d'une façon plus ou moins prononcée, ce qui permet au dispositif d'accouplement (10) d'absorber plus ou moins de contrainte. Le choix du rapport sera effectué en fonction des tolérances prévues pour le système d'impression considéré. De plus les épaisseurs moyennes des parties (16) des flancs seront préférentiellement choisies de manière à ce que les contraintes subies par chacun des flasques (12 et 13) soient équivalentes.

Dans l'exemple de réalisation représenté sur les Figures 4 et 5, le premier flasque (12) présente un évidement dont la seule fonction est de réduire l'épaisseur moyenne de la partie (16) de son flanc faisant fonction de membrane.

Naturellement, différentes formes géométriques peuvent être envisagées, différentes de celle représentée à titre d'exemple sur les Figures 4 et 5, sans sortir du cadre de l'invention. Dès lors que le rapport défini sera respecté le dispositif remplira ses fonctions, et dès lors que la matière sera conforme à celle qui a été définie, le dispositif d'accouplement selon l'invention présentera une excellente fiabilité malgré les contraintes subies.

Un dispositif d'accouplement selon l'invention permet donc de résoudre le problème technique du manque de fiabilité des systèmes actuels, de façon particulièrement élégante et efficace, et dans un espace équivalent, ce qui permet notamment de l'utiliser en remplacement des dispositifs d'accouplements sur des chaînes d'impression en héliogravure déjà installées.

La présente invention n'est pas limitée aux modes de réalisation décrits et illustrés. De nombreuses modifications peuvent être réalisées, sans pour autant sortir du cadre défini par la portée du jeu de revendications.

Optionnellement, et comme représenté sur la Figure 4, le dispositif est creux et la partie centrale cylindrique (11) prend la forme d'un tube, à l'intérieur duquel peut circuler l'air ou le liquide actionnant les différents éléments pneumatiques comme, par exemple, la pince (8). Préférentiellement, l'épaisseur de la paroi de ce tube est alors comprise entre 0,7 mm et 2 mm.

## Revendications

1. Dispositif d'accouplement pour l'entraînement d'un cylindre d'un dispositif d'impression, comportant une partie centrale cylindrique (11), deux flasques (12, 13) placés respectivement à l'une et l'autre des extrémités de la partie centrale cylindrique (11) et une unique piece d'acier, **caracterisé**
- **en ce qu'**il comprend une unique pièce d'acier allié au chrome, nickel et molybdène ayant subit une trempe à coeur,
- **en ce que** chacun des flasques (12, 13) comporte un flanc dont une partie (16) fait fonction de membrane, et
- **en ce que** pour chacun des flasques (12, 13), le rapport de la différence entre le diamètre du flasque et le diamètre de la partie centrale cylindrique (11) divisée par l'épaisseur moyenne de la partie (16) du flanc du flasque, est compris entre 7 et 15.

2. Dispositif d'accouplement selon la revendication 1, **caractérisé en ce qu'**il est creux et **en ce que** la partie centrale cylindrique (11) prend la forme d'un tube.

3. Dispositif d'accouplement selon la revendication 2, **caractérisé en ce que** l'épaisseur de la paroi de la partie centrale cylindrique (11) est comprise entre 0,7 mm et 2 mm.

## Claims

1. Coupling device for the driving of a printing device cylinder including a central cylindrical portion (11), two flanges (12, 13) disposed respectively at one and at the other of the ends of the central cylindrical portion (11) and a single part of steel, **characterized**
- **in that** it comprises a single part of chromium, nickel and molybdenum alloyed steel having undergone a core hardening,
- **in that** each of the flanges (12, 13) includes a side a portion (16) of which acts as a membrane, and
- **in that** for each of the flanges (12, 13), the ratio of the difference between the diameter of the flange and the diameter of the central cylindrical portion (11) divided by the average thickness of the portion of the flange side (16) is in between 7 and 15.

2. Coupling device according to claim 1, **characterized in that** it is hollow and **in that** the central cylindrical portion (11) takes the shape of a tube.

3. Coupling device according to claim 2, **characterized in that** the thickness of the wall of the central cylindrical portion (11) is comprised between 0,7 mm and 2 mm.

## Patentansprüche

1. Kopplungseinrichtung zum Antreiben eines Zylinders einer Druckeinrichtung, umfassend einen zentralen zylindrischen Abschnitt (11), zwei jeweils an dem einem und an dem anderen Ende des zentralen zylindrischen Abschnitts (11) vorgesehene Flansche (12, 13) und ein einzelnes Bauteil aus Stahl,
**dadurch gekennzeichnet,**
**dass** sie ein einzelnes Bauteil aus Chrom-, Nickel- und Molybdänlegiertem Stahl umfasst, das einem Kernhärten unterzogen worden ist,
**dass** jeder der Flansche (12, 13) eine Seite umfasst, von der ein Abschnitt (16) als Membran wirkt, und
**dass** für jeden der Flansche (12, 13) das Verhältnis des Unterschiedes zwischen dem Durchmesser des Flansches und dem Durchmesser des zentralen zylindrischen Abschnitts (11), geteilt durch die durchschnittliche Dicke des Abschnitts (16) der Flansch-Seite zwischen 7 und 15 liegt.

2. Kopplungseinrichtung nach Anspruch 1,
**dadurch gekennzeichnet, dass** sie hohl ist, und dass der zentrale zylindrische Abschnitt (11) die Form eines Rohres annimmt.

3. Kopplungseinrichtung nach Anspruch 2,
**dadurch gekennzeichnet, dass** die Dicke der Wand des zentralen zylindrischen Abschnitts (11) zwischen 0,7mm und 2mm liegt.
